# EUROPÄISCHE PATENTSCHRIFT

(11) **EP 1 771 276 B1**
(45) Veröffentlichungstag und Bekanntmachung des Hinweises auf die Patenterteilung: **05.09.2007**
(21) Anmeldenummer: 05801755.9
(22) Anmeldetag: 29.10.2005
(51) Int. Cl.: B23Q 11/08

(54) **ABDECKVORRICHTUNG**
COVER DEVICE
SYSTEME DE RECOUVREMENT

(30) Priorität: 06.07.2005 DE 102005031539
(43) Veröffentlichungstag der Anmeldung: 11.04.2007
(73) Patentinhaber: Möller Werke GmbH, 33649 Bielefeld (DE)
(72) Erfinder: VOGT, Karsten, 33649 Bielefeld (DE); KAUFMANN, Thomas, 33339 Gütersloh (DE)
(74) Vertreter: Schober, Mirko
(86) Internationale Anmeldenummer: PCT/EP2005/011597
(87) Internationale Veröffentlichungsnummer: WO 2007/003225

(56) Entgegenhaltungen:
- DE-A1- 10 217 115
- DE-U1- 20 207 343
- DE-U1- 20 220 812

## Beschreibung

### TECHNISCHES GEBIET

Die Erfindung betrifft eine Abdeckvorrichtung für Führungsbahnen von Maschinen nach dem Oberbegriff von Anspruch 1.

### STAND DER TECHNIK

Eine entsprechende Abdeckvorrichtung ist aus DE 102 17 115 A1 bekannt. Beschrieben ist dort insbesondere eine ausziehbare bzw. zusammenschiebbare Lamellenabdeckung für einen Faltenbalg, an dessen parallel zueinander geführten Rahmen sich überdeckende erste Lamellen befinden. Im Eckbereich, in welchem sich die Lamellen an den Längsseiten eines Rahmens treffen, ist ein zusätzlicher Lamellensatz angeordnet, wobei die zusätzlichen Lamellen die am Rahmen vorhandenen Lamellen überdecken und den Eckbereich schließen. Nachteilig an dieser Konstruktion ist, daß durch die Anordnung der zusätzlichen Lamellen im Eckbereich eine unerwünschte Schräge entsteht, die vor allem den nutzbaren Raum verringert.

### DIE ERFINDUNG

Aufgabe der vorliegenden Erfindung ist es daher, eine Abdeckeinrichtung zur Verfügung zu stellen, bei der die erwähnten Nachteile nicht auftreten und insbesondere ein dichtes Zusammenschieben benachbarter Rahmen und damit eine möglichst kompakte Anordnung der Abdeckvorrichtung möglich ist.

Gelöst wird diese Aufgabe mit den Merkmalen des Anspruchs 1. Vorteilhafte Ausführungsformen finden sich in den Unteransprüchen.

Erfindungsgemäß sind mit dem Rahmen flexibel verbundene Eckelemente vorgesehen, die jeweils aus zwei dem jeweiligen Eckbereich entsprechend angeordneten Flügeln bestehen. Jeder Flügel ist mit Rahmen verbunden. Die Verbindung eines Flügels mit dem Rahmen geschieht bevorzugt über einen flexiblen, tordierbaren Streifen, wobei je ein Streifen bevorzugt mit jeweils einem Schenkel verbunden ist. Alternativ können die Streifen auch einstückig ausgebildet sein. Die Flügel liegen über den an den jeweiligen Schenkeln angeordneten Lamellen und überdecken diese im Eckbereich des Rahmens, ohne daß hierbei im Eckbereich eine Schräge entsteht. Wie die Lamellen überdecken sich die Eckelemente benachbarter Rahmen. Die erfindungsgemäße Abdeckvorrichtung kann durch Verschieben der Rahmen auf der Führungsbahn zusammengeschoben bzw. auseinandergezogen werden, wobei die Eckbereiche in jeder Gebrauchslage der Abdeckvorrichtung abgedeckt bleiben. Durch die flexible Anbindung des Eckelements am Rahmen und eine vorteilhafterweise abgeschrägte Kante der Flügel an ihrem rahmenseitigen Ende wird das Eckelement beim Zusammenschieben der Abdeckvorrichtung nach unten gedrückt. Hierdurch können die Rahmen der Abdeckeinrichtung besonders dicht zusammengeschoben und die Abdeckeinrichtung im zusammengeschobenen Zustand besonders platzsparend ausgebildet werden.

### KURZBESCHREIBUNG DER ZEICHNUNGSABBILDUNG

Die Erfindung wird nachfolgend anhand der Figuren 1 bis 3 schematisch näher erläutert.
- Figur 1 -: zeigt eine perspektivische Ansicht des Eckbereichs eines Rahmens der erfindungsgemäßen Abdeckvorrichtung,
- Figur 2 -: zeigt eine weitere perspektivische Ansicht des Eckbereichs eines Rahmens der erfindungsgemäβen Abdeckvorrichtung,
- Figur 3 -: zeigt eine vergrößerte Ansicht des erfindungsgemäßen Eckelements in perspektivischer Darstellung,
- Figur 4 -: zeigt eine perspektivische Darstellung des Eckbereichs von mehreren miteinander verbundenen Rahmen in einer ersten Ansicht.
- Figur 5 -: zeigt die Darstellung aus Figur 4 in einer weiteren Ansicht aus anderer Perspektive.
- Figur 6 -: zeigt eine weitere Ausführungsform der erfindungsgemäßen Abdeckvorrichtung mit mehreren miteinander verbundenen innen liegenden Rahmen und außen liegenden Lamellen und Eckelementen in perspektivischer Darstellung,
- Figur 7 -: zeigt einer Draufsicht der Abdeckung aus Figur 6,
- Figur 8 -: zeigt eine perspektivische Ansicht eines Rahmens der Abdeckvorrichtung aus Figur 6,
- Figur 9 -: zeigt eine alternative Variante der Befestigung des erfindungsgemäßen Eckelements am Rahmen,
- Figur 10 -: zeigt eine weitere Variante der Befestigung des erfindungsgemäßen Eckelements am Rahmen.

### BESTER WEG ZUR AUSFÜHRUNG DER ERFINDUNG

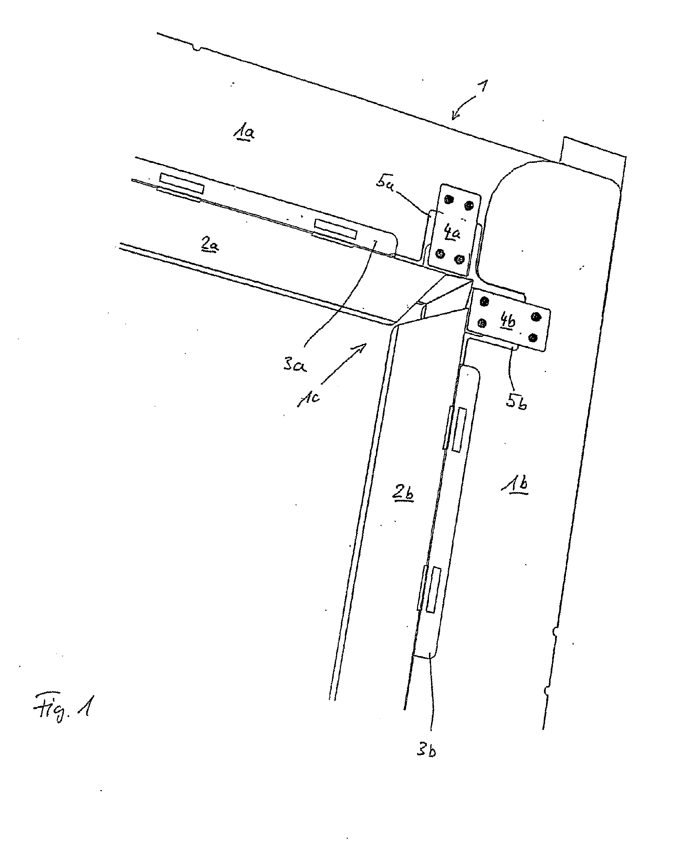

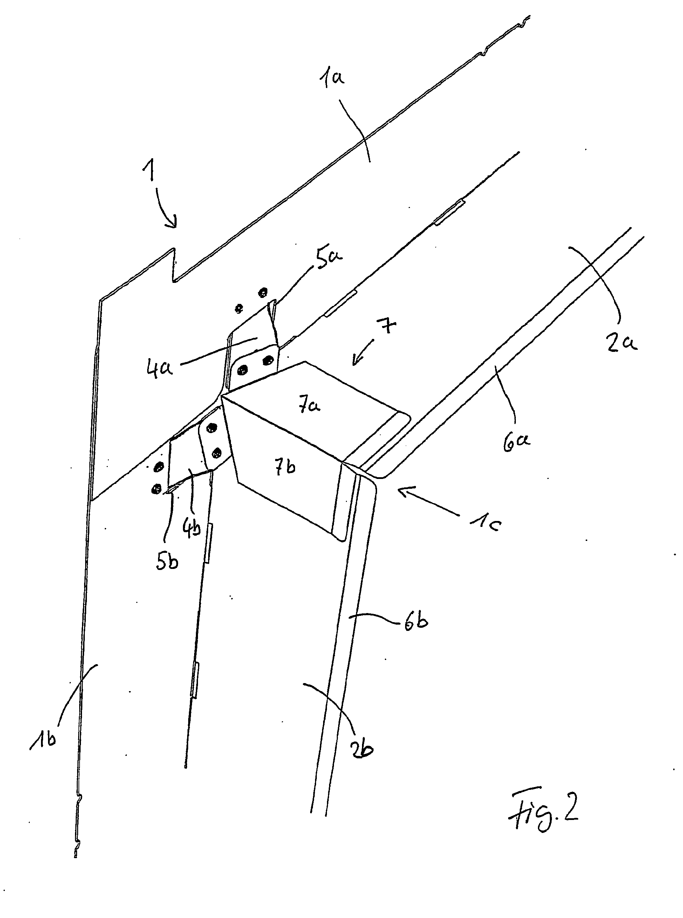

Die Konstruktion der erfindungsgemäßen Abdeckeinrichtung wird in den Figuren 1 und 2 anhand eines Ausschnitts von einem der die Abdeckeinrichtung bildenden Rahmen 1 erläutert. Dargestellt ist der für die Erfindung maßgebliche Eckbereich des Rahmens 1. Der Rahmen 1 umfaßt wenigstens zwei einen Eckbereich 1c definierende Schenkel 1a, 1b.

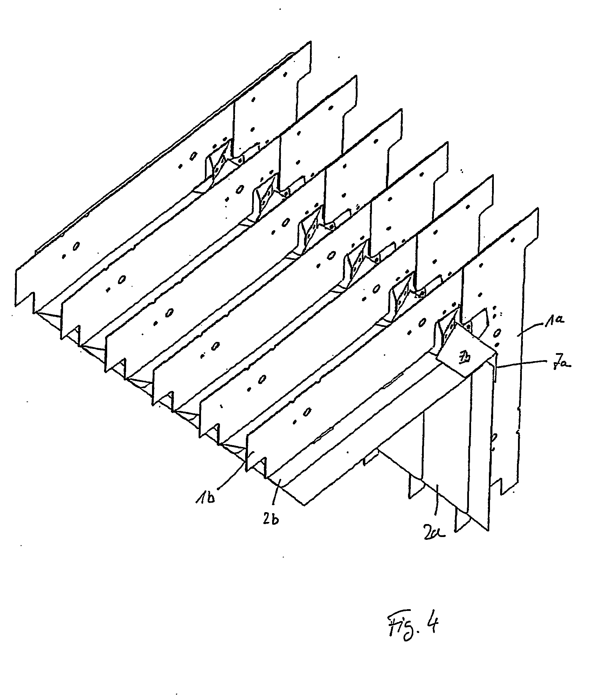

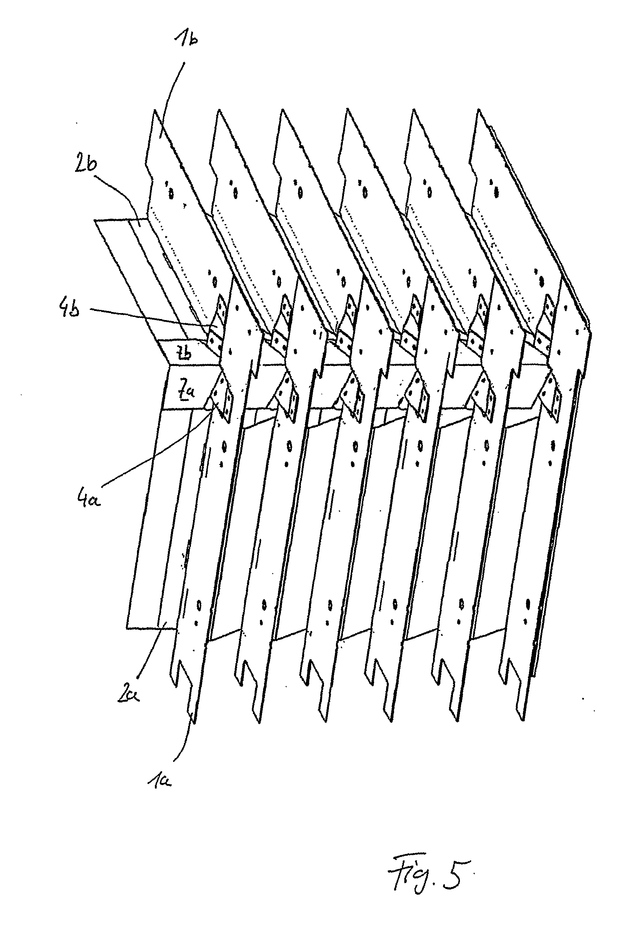

Der Rahmen 1 kann dabei L-förmig, U-förmig oder auf andere Weise gewinkelt ausgebildet sein. Im gezeigten Beispiel weist der Eckbereich 1c einen 90°-Winkel auf, wobei auch andere Winkel denkbar wären. Die gesamte Abdeckeinrichtung (nicht gezeigt) wird durch mehrere dieser Rahmen 1 gebildet, welche dann parallel verschieblich zueinander angeordnet sind. Vorteilhafterweise ist die Abdeckeinrichtung als Faltenbalg ausgebildet. Jeder der Schenkel 1a, 1b ist - ggf. einstückig - mit einer entsprechenden Lamelle 2a, 2b ausgebildet, die etwa senkrecht (aber mit einem gewissen Spiel und einer gewissen Flexibilität) zum entsprechenden Schenkel 1a, 1b verläuft. Die Lamellen sind vorzugsweise über die als Abkantungen ausgebildeten Befestigungselemente 3a, 3b mit den entsprechenden Schenkeln 1a, 1b des Rahmens 1 verbunden, wobei die Schenkel 1a, 1b und die entsprechenden Lamellen 2a, 2b auch einstückig ausgebildet sein können. Die Lamellen 2a, 2b benachbarter Rahmen 1 in der Abdeckeinrichtung überlappen sich gegenseitig und werden in Richtung ihrer Schmalseiten beim Öffnen/Schließen der Abdeckeinrichtung übereinander geschoben (vgl. Fig. 4 und 5). Die sich überlappenden Lamellen bilden dabei die eigentliche Abdeckung. An dem dem Rahmen 1 abgewandten Ende der Lamellen 2a, 2b sind Abkröpfungen 6a, 6b vorgesehen, die die Flächen der Lamellen stabilisieren und zudem als Dichtlippe wirken.

Die an den beiden Schenkeln 1a, 1b vorgesehenen Lamellen 2a, 2b werden im Eckbereich 1c des Rahmens 1 durch ein Eckelement 7 überdeckt, so daß die zwischen den Lamellen 2a, 2b im Eckbereich 1c verbleibende Lücke geschlossen wird.

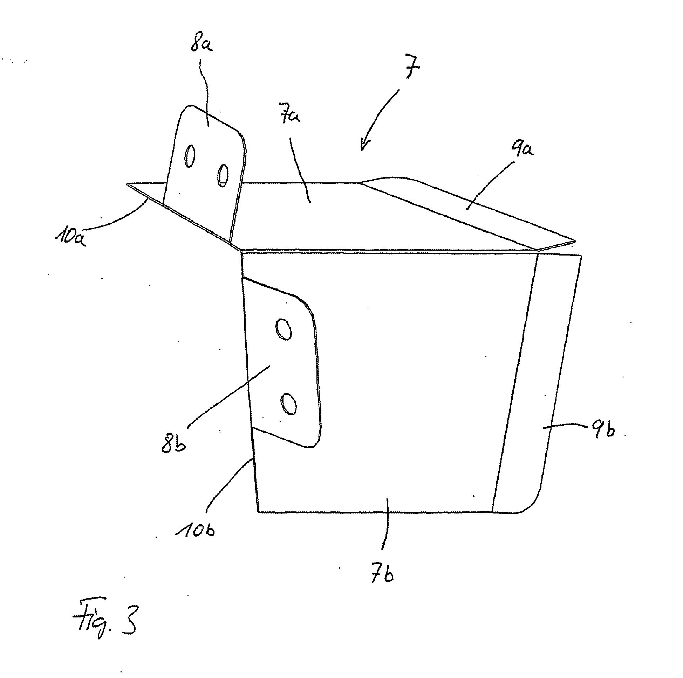

Das Eckelement 7 ist über flexible, vorteilhafterweise streifenförmige Elemente 4a, 4b mit den entsprechenden Schenkeln 1a, 1b flexibel verbunden. Wie in den Figuren 2 und 3 zu sehen, weist das erfindungsgemäße Eckelement 7 zwei aneinander angrenzende, einen Winkel bildende Flügel 7a, 7b auf, wobei der durch die Flügel gebildete Winkel auf den durch die beiden Schenkel 1a, 1b gebildeten Winkel des Eckbereichs 1c angepaßt ist. Ähnlich wie die Lamellen 2a, 2b überdecken auch die an benachbarten Rahmen angebrachten Eckelemente 7 - genauer deren Flügel 7a, 7b - einander und lassen sich mit Öffnen/Schließen der Abdeckvorrichtung übereinander schieben. Auch bei den Eckelementen 7 können an den dem Rahmen 1 abgewandten Enden der Flügel 7a, 7b entsprechende Abkröpfungen 9a, 9b zur Stabilisierung der Flügel vorgesehen werden.

Wie insbesondere in der Figur 3 zu erkennen ist, sind an den Kanten 10a, 10b der Flügel 7a, 7b auf der dem entsprechenden Rahmen 1 zugewandten Seite Befestigungslaschen 8a, 8b zur Befestigung der Flügel 7a, 7b an den entsprechenden Schenkeln 1a, 1b des Rahmens 1 vorgesehen. Die Befestigung des Eckelements 7 am Rahmen 1 erfolgt vorzugsweise über flexible Streifen 4a, 4b, die an einem Ende mit der jeweiligen Befestigungslasche 8a, 8b und am anderen Ende mit dem jeweiligen Schenkel 1a, 1b des Rahmens 1 verbunden sind. In den Schenkeln 1a, 1b des Rahmens 1 sind hierzu vorteilhafterweise Ausnehmungen 5a, 5b vorgesehen, deren Breite etwa der der flexiblen Streifen 4a, 4b entspricht, so daß diese beim Gebrauch der Abdeckvorrichtung in den Ausnehmungen 5a, 5b beweglich bleiben, wodurch das Eckelement 7 eine größere Beweglichkeit erhält.

Die Kanten 10a, 10b sind vorteilhafterweise abgeschrägt, so daß sich das flexibel mit dem Rahmen 1 verbundene Eckelement 7 beim Gebrauch der Abdeckvorrichtung zu deren Innenseite hin kippen läßt. Dies ermöglicht zusammen mit den flexiblen, durch die Ausnehmungen 5a, 5b führbaren Verbindungsstreifen 4a, 4b, daß die Eckelemente 7 beim Zusammenschieben der Abdeckvorrichtung nach innen kippen, wobei gleichzeitig die Befestigungslaschen 8a, 8b in die Ausnehmungen 5a, 5b hinein und die Kanten 10a, 10b an die Schenkel 1a, 1b herangedrückt werden. Die Flügel 7a, 7b des Eckelements 7 bilden dabei entsprechend der jeweiligen Abschrägung 10a, 10b einen von 90° verschiedenen Winkel zum Rahmen 1. Durch diese Maßnahme lassen sich die benachbarten Rahmen der Abdeckvorrichtung beim Öffnen nahezu plan aneinander schieben, so daß die vollständig geöffnete Abdeckvorrichtung äußerst kompakt ausgebildet ist. Beim Schließen der Abdeckvorrichtung werden die benachbarten Rahmen 1 wieder voneinander entfernt (vgl. Fig. 4 und 5). Dabei wird das Eckelement 7 aufgrund seiner durch die Streifen 4a, 4b gebildeten, flexiblen Verbindung mit dem Rahmen 1 aus seiner an den Rahmen 1 herangedrückten Position vom Rahmen 1 weg gezogen, wobei über die Befestigungslaschen 8a, 8b eine Zugkraft auf die flexiblen Elemente 4a, 4b ausgeübt wird. Diese werden dabei durch die Ausnehmungen 5a, 5b gezogen. Wie in den Figuren 4 und 5 zu erkennen ist, werden die flexiblen Elemente 4a, 4b beim Ausziehen der Abdeckvorrichtung aus einer (z. B. in Figur 1 gezeigten) entspannten Haltung in sich verdreht, so daß eine gewisse Spannung auf das Eckelement ausgeübt wird.

Diese sorgt dafür, daß die Eckelemente 7 beim Öffnen der Vorrichtung unterstützend zum jeweiligen Rahmen hin gezogen werden. Im vollständig ausgezogenen Zustand der Abdeckvorrichtung ist das Eckelement 7 dann etwa so ausgerichtet, daß seine Flügel 7a, 7b etwa senkrecht zu den Schenkeln 1a, 1b angeordnet sind.

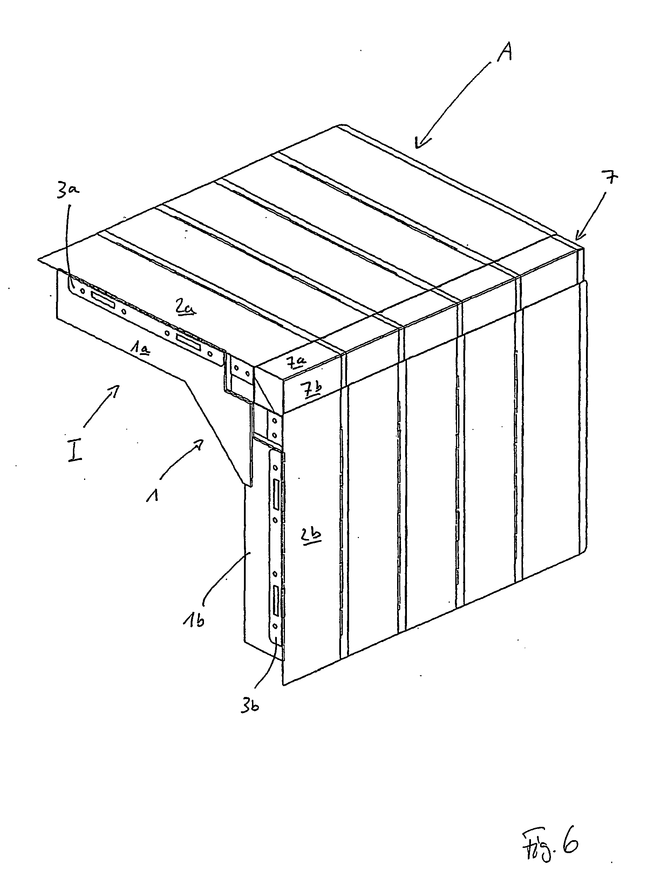

Die Figuren 6 bis 10 zeigen alternative Ausführungsformen der erfindungsgemäßen Abdeckung, wobei die darin dargestellten Bauteile, die denen der Figuren 1 bis 5 entsprechen, mit denselben Bezugszeichen versehen sind, so daß zur Vermeidung von Wiederholungen in der genaueren Beschreibung dieser Bauteile lediglich auf die Unterschiede zur Ausführungsform der Figuren 1 bis 5 eingegangen wird.

Figur 6 zeigt eine alternative Ausführungsform der erfindungsgemäßen Abdeckung in perspektivischer Darstellung. Im Unterschied zur oben erläuterten Ausführungsform liegen die Lamellen 2a, 2b und die Eckelemente 7 nicht auf der Innenseite I, sondern auf der Außenseite A der Rahmen 1 bzw. der Schenkel 1a 1b. Natürlich ist es auch möglich, die Abdekkung so auszugestalten, daß die Rahmen 1 mehr als zwei Schenkel aufweisen. In diesem Fall können Lamellen und Eckelemente 7 sowohl auf der Innenseite I als auch auf der Außenseite A angeordnet sein.

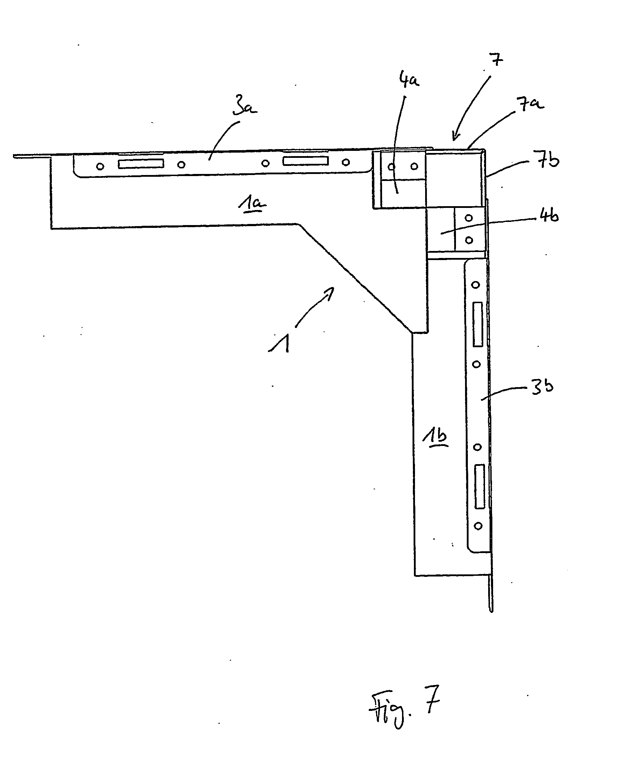

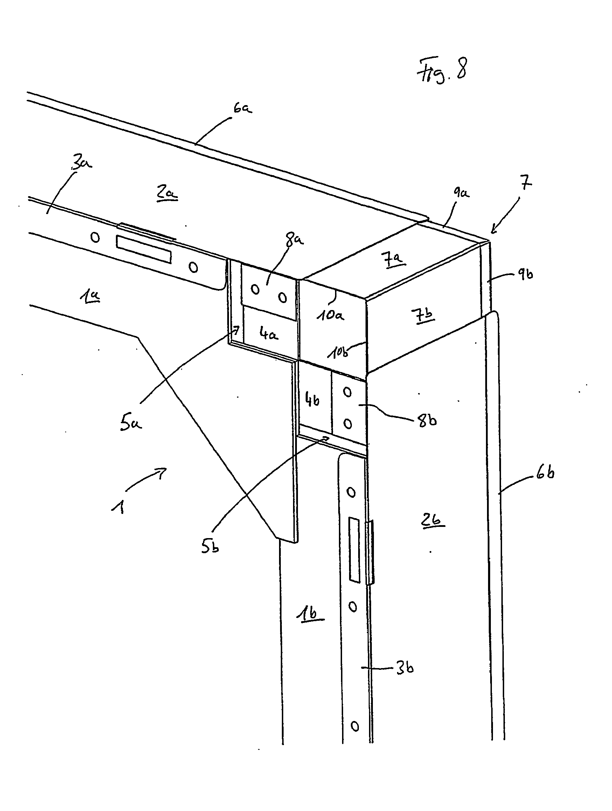

Bei der dargestellten Ausführungsform, welche in den Ansichten der Figuren 7 und 8 im Detail gezeigt ist, ist das Eckelement 7 mit dem Rahmen 1 über die flexiblen Streifen 4a, 4b verbunden. Im Unterschied zur oben erläuterten Ausführungsform sind die flexiblen Streifen 4a, 4b, die an einer Seite mit den Befestigungslschen 8a, 8b der Flügel 7a, 7b verbunden sind, nun einstückig ausgebildet (sie bilden im gezeigten Beispiel eine L-Form) und am Rahmen 1 befestigt.

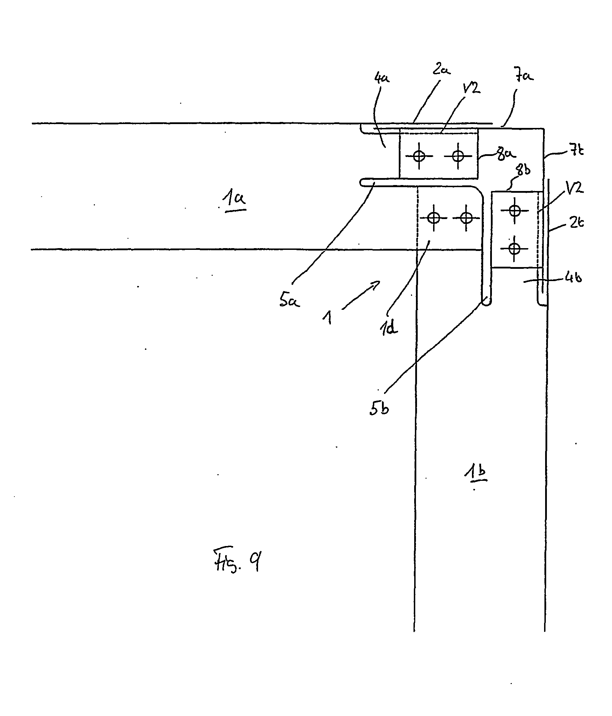

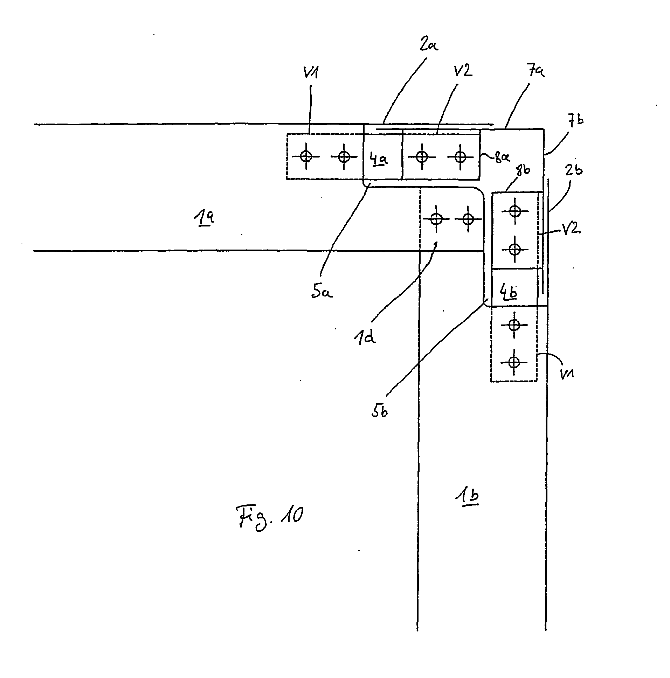

In den Figuren 9 und 10 sind alternative Befestigungsmöglichkeiten des Eckelements 7 am Rahmen 1 bzw. dessen Schenkeln 1a, 1b gezeigt.

In Figur 9 sind die flexiblen Streifen 4a, 4b aus dem Material der jeweiligen Schenkel 1a einstückig herausgearbeitet. In dieser Variante kann auf zusätzliches, für die Herstellung der flexiblen Streifen 4a, 4b erforderliches Material vollständig verzichtet werden. Die in Figur 9 gezeigten flexiblen Streifen 4a, 4b erstrecken sich im wesentlichen in dieselbe Richtung wie die zugehörigen, im Bereich 1d miteinander verbundenen Schenkel 1a bzw. 1b und sind am einen Ende V2 mit der jeweiligen Befestigungslasche 8a, 8b. des entsprechenden Flügels 7a bzw. 7b des Eckelements 7 verbunden.

Alternativ besteht die in Figur 10 gezeigte Möglichkeit, die flexiblen Streifen 4a, 4b separat auszubilden. Neben der Anbringung der Streifen im Bereich V2 (vgl. Figur 9) sind die Streifen 4a, 4b gemäß dieser Ausführungsform auch am jeweiligen Schenkel 1a bzw. 1b in den Bereichen V1 angebracht. Die Anbringung der Streifen erfolgt dabei vorzugsweise durch Vernieten mit den Befestigungslaschen 8a, 8b bzw. mit den Schenkeln 1a, 1b.

## Patentansprüche

1. Abdeckvorrichtung für Führungsbahnen von Maschinen, welche eine Mehrzahl etwa parallel zueinander angeordnete, gegeneinander verschiebliche Rahmen (1) umfaßt, die jeweils wenigstens zwei gegeneinander abgewinkelte, einen gemeinsamen Eckbereich (1c) bildende Schenkel (1a, 1b) aufweisen, an denen jeweils etwa senkrecht zum jeweiligen Schenkel (1a, 1b) angeordnete Lamellen (2a, 2b) vorgesehen sind, wobei sich die Lamellen (2a, 2b) an zueinander parallelen Schenkeln (1a, 1b) benachbarter Rahmen (1) überdecken und ein Eckelement (7) vorgesehen ist, welches zur Abdeckung der Lamellen (2a, 2b) im Eckbereich (1c) des Rahmens (1) ausgelegt ist,
**dadurch gekennzeichnet,**
**daß** das Eckelement (7) zwei zueinander entsprechend dem Winkel der beiden Schenkel (1a, 1b) abgewinkelte, jeweils mit dem Rahmen (1) verbundene Flügel (7a, 7b) aufweist.

2. Abdeckvorrichtung nach Anspruch 1,
**dadurch gekennzeichnet,**
**daß** die Flügel (7a, 7b) mit dem Rahmen (1) jeweils über entsprechende flexible Elemente (4a, 4b) verbunden sind.

3. Abdeckvorrichtung nach einem der vorherigen Ansprüche,
**dadurch gekennzeichnet,**
**daß** die Flügel (7a, 7b) oder/und die Lamellen (2a, 2b) an ihrem vom zugehörigen Rahmen abgewandten Ende eine Abkröpfung (9a, 9b) aufweisen.

4. Abdeckvorrichtung nach einem der vorherigen Ansprüche,
**dadurch gekennzeichnet,**
**daß** wenigstens einer der Flügel (7a, 7b) an seinem dem zugehörigen Rahmen zugewandten Ende eine abgeschrägte Kante (10a, 10b) aufweist.

5. Abdeckvorrichtung nach einem der vorherigen Ansprüche,
**dadurch gekennzeichnet,**
**daß** die Abdeckvorrichtung als Faltenbalg ausgebildet ist.

6. Abdeckvorrichtung nach einem der vorherigen Ansprüche,
**dadurch gekennzeichnet,**
**daß** die Schenkel (1a, 1b) mit den zugehörigen Lamellen (2a, 2b) einstückig ausgebildet sind.

7. Abdeckvorrichtung nach einem der vorherigen Ansprüche,
**dadurch gekennzeichnet,**
**daß** die Schenkel (1a, 1b) einstückig ausgebildet sind.

8. Abdeckvorrichtung nach einem der vorherigen Ansprüche,
**dadurch gekennzeichnet,**
**daß** in den Schenkeln (1a, 1b) Ausnehmungen (5a, 5b) vorgesehen sind, die zur Aufnahme von am Eckelement (7) vorgesehenen Befestigungslaschen (8a, 8b) vorgesehen sind.

9. Abdeckvorrichtung nach Anspruch 8,
**dadurch gekennzeichnet,**
**daß** es sich bei den flexiblen Elementen (4a, 4b) um Streifen aus einem flexiblen Material handelt, welche fest mit den Befestigungslaschen (8a, 8b) und mit dem Rahmen (1) verbunden sind.

10. Abdeckvorrichtung nach einem der vorherigen Ansprüche,
**dadurch gekennzeichnet,**
**daß** die flexiblen Elemente (4a, 4b) einstückig ausgebildet sind.

11. Abdeckvorrichtung nach einem der Ansprüche 1 bis 9,
**dadurch gekennzeichnet,**
**daß** die flexiblen Elemente (4a, 4b) jeweils mit einem entsprechenden Schenkel (1a) bzw. (1b) verbunden sind.

12. Abdeckvorrichtung nach einem der vorherigen Ansprüche,
**dadurch gekennzeichnet,**
**daß** die flexiblen Elemente (4a, 4b) mit den zugehörigen Schenkeln (1a, 1b) einstückig ausgebildet sind.

13. Abdeckvorrichtung nach einem der vorherigen Ansprüche,
**dadurch gekennzeichnet,**
**daß** sich die flexiblen Elemente (4a, 4b) im wesentlichen in senkrecht oder im wesentlichen parallel zu den zugehörigen Schenkeln (1a) bzw. (1b) erstrecken.

## Claims

1. Cover device for guideways of machines which device comprises a plurality of frames (1) arranged so as to be parallel to each other and displaceable in relation to each other, each of said frames (1) comprising at least two side pieces (1a, 1b) arranged at an angle to each other and forming a common corner region (1c), on which side pieces (1a, 1b) plates (2a, 2b) arranged perpendicular to the respective side piece (1a, 1b) are provided, wherein the plates (2a, 2b) overlap on side pieces (1a, 1b), parallel to each other, of adjacent frames (1) and a corner element (7) is provided which is designed to cover the plates (2a, 2b) in the corner region (1c) of the frame,
**characterised in that**
the corner element (7) comprises two wings (7a, 7b) at an angle to each other corresponding to the angle of the two side pieces (1a, 1b) and each being connected to the frame (1).

2. Cover device according to claim 1,
**characterised in that**
the wings (7a, 7b) are each connected to the frame (1) by means of corresponding flexible elements (4a, 4b).

3. Cover device according to one of the preceding claims,
**characterised in that**
the wings (7a, 7b) and / or the plates (2a, 2b) comprise an offset area (9a, 9b) at their end facing away from the associated frame.

4. Cover device according to one of the preceding claims,
**characterised in that**
at least one of the wings (7a, 7b) comprises a bevelled edge (10a, 10b) at its end facing the associated frame.

5. Cover device according to one of the preceding claims,
**characterised in that**
the cover device is formed as a bellows.

6. Cover device according to one of the preceding claims,
**characterised in that**
the side pieces (1a, 1b) are formed integrally with the associated plates (2a, 2b).

7. Cover device according to one of the preceding claims,
**characterised in that**
the side pieces (1a, 1b) are integrally formed.

8. Cover device according to one of the preceding claims,
**characterised in that**
recesses (5a, 5b) are provided in the side pieces (1a, 1b), said recesses (5a, 5b) being provided to receive fixing lugs (8a, 8b) disposed on the corner element (7).

9. Cover device according to claim 8,
**characterised in that**
the flexible elements (4a, 4b) are strips of a flexible material which are fixedly connected to the fixing lugs (8a, 8b) and to the frame (1).

10. Cover device according to one of the preceding claims,
**characterised in that**
the flexible elements (4a, 4b) are integrally formed.

11. Cover device according to one of the claims 1 to 9,
**characterised in that**
the flexible elements (4a, 4b) are each connected to a corresponding side piece (1a) or (1b).

12. Cover device according to one of the preceding claims,
**characterised in that**
the flexible elements (4a, 4b) are formed integrally with the associated side pieces (1a, 1b).

13. Cover device according to one of the preceding claims,
**characterised in that**
the flexible elements (4a, 4b) extend substantially perpendicular or substantially parallel to the associated side pieces (1a) or (1b).

## Revendications

1. Système de recouvrement pour voies de guidage de machines, qui comprend plusieurs cadres (1) disposés à peu près parallèlement les uns par rapport aux autres et pouvant être poussés les uns contre les autres, lesquels présentent au moins deux branches (1a, 1b) l'une contre l*'*autre, formant une encoignure commune (1c), sur chacune desquelles sont prévues des lamelles (2a, 2b), agencées à peu près perpendiculairement par rapport aux branches (1a, 1b), les lamelles (2a, 2b) se recouvrant sur des branches (1a, 1b) parallèles de cadres voisins (1), et un élément d'angle (7) étant prévu, lequel est dimensionné pour le recouvrement des lamelles (2a, 2b) dans l'encoignure (1c) du cadre (1),
**caractérisé en ce que**
l'éléments d'angle (7) présente deux ailes (7a, 7b), reliées chacune au cadre (1) et coudées l'une par rapport à l'autre conformément à l'angle des deux branches (1a, 1b).

2. Système de recouvrement selon la revendication 1,
**caractérisé en ce que**
les ailes (7a, 7b) sont reliées chacune au cadre (1) par l'intermédiaire d'éléments flexibles (4a, 4b) appropriés.

3. Système de recouvrement selon l'une des revendications précédentes,
**caractérisé en ce que**
les ailes (7a, 7b) ou / et les lamelles (2a, 2b) présentent, à leur extrémité opposée au cadre associé, une pliure (9a, 9b).

4. Système de recouvrement selon l'une des revendications précédentes,
**caractérisé en ce que**
l'une des ailes (7a, 7b) au moins présente à son extrémité orientée vers le cadre associé, un bord chanfreiné (10a, 10b).

5. Système de recouvrement selon l'une des revendications précédentes,
**caractérisé en ce que**
le système de recouvrement est conçu en tant que soufflet.

6. Système de recouvrement selon l'une des revendications précédentes,
**caractérisé en ce que**
les branches (1a, 1b) sont formés d'une pièce avec les lamelles (2a, 2b).

7. Système de recouvrement selon l'une des revendications précédentes,
**caractérisé en ce que**
branches (1a, 1b) sont formés d*'*une pièce.

8. Système de recouvrement selon l'une des revendications précédentes,
**caractérisé en ce que**,
dans les branches (1a, 1b) sont pratiqués des évidements (5a, 5b) qui sont prévus pour recevoir des pattes de fixation (8a, 8b) qui équipent l'élément d'angle 7.

9. Système de recouvrement selon la revendication 8,
**caractérisé en ce que**
les éléments flexibles (4a, 4b) sont des bandes en matériau flexible qui sont reliées fixement aux pattes de fixation (8a, 8b) et au cadre (1).

10. Système de recouvrement selon l'une des revendications précédentes,
**caractérisé en ce que**
les éléments flexibles (4a, 4b) sont formés d'une pièce.

11. Système de recouvrement selon l'une des revendications 1 à 9,
**caractérisé en ce que**
les éléments flexibles (4a, 4b) sont reliés chacun à une branche (la) respectivement (1b) correspondante.

12. Système de recouvrement selon l'une des revendications précédentes,
**caractérisé en ce que**
les éléments flexibles (4a, 4b) sont réalisés d'une pièce avec les branches (1a, 1b) associées.

13. Système de recouvrement selon l'une des revendications précédentes,
**caractérisé en ce que**
les éléments flexibles (4a, 4b) s'étendent sensiblement perpendiculairement ou sensiblement parallèlement aux branches (1a) respectivement (1b) associées.
